(19) **Europäisches Patentamt**
**European Patent Office**
**Office européen des brevets**

(11) **EP 1 226 794 B1**

(12) **EUROPÄISCHE PATENTSCHRIFT**

(45) Veröffentlichungstag und Bekanntmachung des Hinweises auf die Patenterteilung:
**25.07.2007 Patentblatt 2007/30**

(51) Int Cl.:
***G05B 19/401*** *(2006.01)* ***A61C 13/00*** *(2006.01)*

(21) Anmeldenummer: **02002247.1**

(22) Anmeldetag: **30.01.2002**

(54) **Verfahren zur Bestimmung aktueller Positionsdaten eines Bearbeitungswerkzeuges und Vorrichtung hierzu**

Method for determining the actual positional data of a tool and device therefor

Méthode pour la détermination de données de positionnement actuelles, ainsi que dispositif associé

(84) Benannte Vertragsstaaten:
**AT BE CH CY DE DK ES FI FR GB GR IE IT LI LU MC NL PT SE TR**

(30) Priorität: **30.01.2001 DE 10120341**

(43) Veröffentlichungstag der Anmeldung:
**31.07.2002 Patentblatt 2002/31**

(73) Patentinhaber: **Sirona Dental Systems GmbH 64625 Bensheim (DE)**

(72) Erfinder: **Rothenberger, Bernd, Dipl.-Ing. 76593 Gernsbach (DE)**

(74) Vertreter: **Sommer, Peter Sommer Patentanwalt und European Patent and Trademark Attorney Augustaanlage 32 68165 Mannheim (DE)**

(56) Entgegenhaltungen:
**EP-A- 1 060 712 DE-A1- 4 030 175**

• **YALOU HUANG ET AL: "Calibration of two cooperative manipulators via pseudo-closed-loop method" SYSTEMS, MAN AND CYBERNETICS, 1996., IEEE INTERNATIONAL CONFERENCE ON BEIJING, CHINA 14-17 OCT. 1996, NEW YORK, NY, USA,IEEE, US, Bd. 2, 14. Oktober 1996 (1996-10-14), Seiten 1465-1470, XP010207023 ISBN: 0-7803-3280-6**

**Beschreibung**

Technisches Gebiet

Die Erfindung betrifft ein Verfahren zur Bestimmung aktueller Positionsdaten eines Bearbeitungswerkzeuges und eine Vorrichtung hierzu und ist insbesondere auf dem Gebiet der Herstellung von verwendungsfertigen Zahnrestaurations-Passkörpern mittels Schleifinstrumenten in dentalen CAD/CAM-Schleifmaschinen anzuwenden.

Stand der Technik

Zur formschleifenden Bearbeitung von Keramikrohlingen sind Schleifstifte mit definiert geformter Oberfläche besonders geeignet. In einem automatisierten Herstellungsverfahren besteht dabei die Notwendigkeit, die Lage und Dimension des Schleifstiftes vor jedem Arbeitsgang zumindest aber nach Wechsel des Schleifstiftes zu vermessen. Diese Vermessung kann durch Antasten an ein Werkstück bekannter Größe erreicht werden. Der Antastvorgang besteht im Wesentlichen aus einem mit geringer Drehzahl rotierendem Schleifer und einer Bewegung des Schleifers gegen das Werkstück oder einer Bewegung des Werkstücks gegen den Schleifer. Der Antastvorgang wird durch den reibenden Kontakt zwischen Werkstück und Schleifer beendet, wenn der reibende Kontakt die Drehzahl des Schleifers auf Null verringert hat.

Aus der DE 40 30 175 C2 ist ein Verfahren zum kalibrieren eines motorisch angetriebenen und mit Hilfe einer Vorschubeinrichtung auf ein zu bearbeitendes Werkstück zu und von diesem wegbewegbaren Werkzeuges in Bezug auf das Werkstück bzw. einen das Werkstück aufnehmenden Halter sowie eine Vorrichtung zur Durchführung des Verfahrens bekannt.

Es hat sich gezeigt, dass das dort beschriebene Verfahren dann an seine Grenzen stößt, wenn die Form der Reibflächen äußerst undefiniert oder klein wird, was insbesondere bei zur Spitze sich verjüngenden Schleifern zu hohen Positionierungenauigkeiten beim axialen Antasten mit der Spitze führen kann, weil die exakte Form der Schleiferspitze und die Verteilung der Schleifkörner auf der Schleiferspitze oft stark variieren.

Die Aufgabe der Erfindung besteht darin, die genauen linearen Positionierdaten eines Werkzeuges mit beliebiger Spitzengeometrie zu bestimmen.

Darstellung der Erfindung

Die Erfindung wird mit den Mitteln des Anspruch 1 gelöst. Zur Bestimmung der genauen linearen Positionierdaten eines ersten Schleifers mit starker Zuspitzung wird ein zweiter Schleifer mit großer stirnseitiger Schleiffläche verwendet. Zuerst werden mittels verschiedener Antastvorgänge die absoluten Positionierdaten des zweiten Schleifers ermittelt. Die große stirnseitige Bearbeitungsfläche des zweiten Schleifers erlaubt auch in axialer Richtung eine genaue absolute Positionsbestimmung an einer Referenzfläche, da die Bearbeitungsfläche ausreichend groß ist. Jetzt werden der erste und der zweite Schleifer grob einander gegenüber positioniert. Dabei sind die Schleiferachsen koaxial mit einem ausreichenden Versatz zu positionieren. Nun rotiert man den zweiten Schleifer mit niedriger Drehzahl und bewegt die beiden Schleifer stirnseitig aufeinander zu. Dabei spielt es keine Rolle, welcher der beiden Schleifer bewegt wird. Treffen die beiden Schleifer aufeinander, so wird die Rotation des zweiten Schleifers an der Spitze des ersten Schleifers gebremst.

Die Größe des Versatzes bestimmt hierbei ganz wesentlich das Bremsmoment. Aus den absoluten Positionierwerten des zweiten Schleifers kann nun indirekt die absolute Position des ersten spitzen Schleifers bestimmt werden. Insbesondere ist diese relative Vermessung sehr gut bei einer Schleifbearbeitung geeignet, bei der ein Werkstück mit einem spitzen und einem stirnseitig großflächigen Schleifer beschliffen wird.

Vorteilhafte Ausgestaltungen der Erfindung sind in den Unteransprüche angegeben.

Darüber hinaus weist eine Vorrichtung zur Durchführung des erfindungsgemäßen Verfahrens die Merkmale des Anspruch 11 auf. Diese Vorrichtung enthält eine erste und eine zweite Spindel zur Aufnahme jeweils mindestens eines in Rotation versetzbaren Bearbeitungswerkzeuges mit einer sich zur Spitze verjüngenden bzw. mit einer stirnseitigen Bearbeitungsfläche, wobei die Spindeln so angeordnet und so gelagert sind, dass die Bearbeitungswerkzeuge und das Werkstück im Sinne einer Materialabtragung am Werkstück aufeinander zu und von einander weg bewegt werden können. Ferner sind Antriebsmotoren zur Verstellung der Spindeln und für den Antrieb der Bearbeitungswerkzeuge sowie Mittel zur Erzeugung ein den Vorschubweg des Werkzeuges festlegendes Signal enthalten, welches zur Ermittlung der Startposition des Bearbeitungswerkzeuges verwendet wird. Dadurch, dass die Vorrichtung eine Berührungsfläche aufweist, die durch die stirnseitige Bearbeitungsfläche des sich drehenden Werkzeugs gebildet ist und dass das erste Bearbeitungswerkzeug achsparallel mit einem Versatz auf die Berührungsfläche ausgerichtet ist, lässt sich die Position des Bearbeitungswerkzeugs besonders gut bestimmen.

Vorteilhafterweise weist das erste Werkzeug eine sich verjüngende Spitze auf und ist dabei insbesondere als Kugelschleifer oder Kegelschleifer mit Spitze und das zweite Werkzeug als eine Stirnfläche eines Zylinders ausgebildet.

Kurzbeschreibung der Zeichnung

In der Zeichnung ist ein Ausführungsbeispiel der Erfindung dargestellt. Es zeigt die

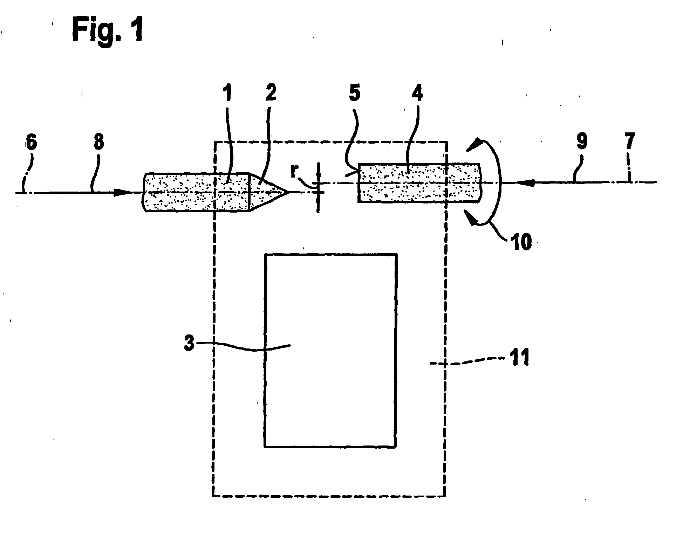

Fig. 1    eine Prinzipskizze der Ausrichtung der Bearbeitungswerkzeuge vor dem Berührvorgang.

Ausführungsbeispiel der Erfindung

Die in Fig.1 dargestellte Prinzipskizze zeigt ein erstes Bearbeitungswerkzeug 1 mit einer Spitze 2 in Form eines Kegelschleifers, welches über eine nicht dargestellte Antriebswelle zum Zweck der Bearbeitung eines Werkstücks 3 in Drehung versetzt werden kann. Dazu wirkt auf die Antriebswelle ein nicht dargestellter Antriebsmotor ein.

Weiterhin ist ein Bearbeitungswerkzeug 4 mit einer großen stirnseitigen Bearbeitungsfläche 5 in Form eines Zylinderschleifers gezeigt, welche in eine der Spitze 2 gegenüberliegende Lage in einem Abstand zum Werkstück 3 gebracht ist. Zum Zweck der Bearbeitung des Werkstücks 3 können die Bearbeitungswerkzeuge 1, 4 entlang der Achsen 6, 7 bewegt und um diese Achsen herum gedreht werden, angedeutet durch die Pfeile 8 und 9, die in Richtung des Vorschubs zeigen sowie durch den Pfeil 10 für die Drehung des Bearbeitungswerkzeugs 4.

Die Bearbeitungswerkzeuge 1 und 4 sind zur Positionsbestimmung der Spitze 2 in Vorschubrichtung außerhalb des Werkstücks 3 aber innerhalb eines das Werkstück aufnehmenden Bearbeitungsraums 11 in eine Lage gebracht, in der die Drehachsen 6, 7 zwar parallel zueinander sind, aber einen Versatz r zueinander aufweisen. Vor jedem Schleifvorgang werden die Schleifer derart koaxial um den Versatz r versetzt für den Antastvorgang positioniert.

Daraufhin wird der Schleifer 4 in Drehung versetzt und mit niedriger Drehzahl vorsichtig auf den Schleifer 1 in Richtung des Vorschubs bewegt. Dabei spielt es keine Rolle, welcher der beiden Schleifer bewegt wird und es können auch die beiden Schleifer bewegt werden. Treffen die beiden Schleifer aufeinander, so wird die Rotation des zweiten Schleifers an der Spitze des ersten Schleifers gebremst. Die Größe des Versatzes bestimmt hierbei ganz wesentlich das Bremsmoment. Das gewünschte Bremsmoment $M_B$ bei Kontakt ist:

$$M_B = \mu * F_{axial} * r$$

und entsteht dadurch, dass sich einzelne Schleifkörner ineinander verhaken und so den Reibkoeffizienten $\mu$ bestimmen. Die Kraft $F_{axial}$ ist die Kraft, mit der die beiden Bearbeitungswerkzeuge in axialer Richtung aufeinander einwirken. Meist ist eine genaue Kenntnis des Bremsmoments nicht gegeben, jedoch ist bei nennenswertem Versatz r bereits bei geringer axialer Krafteinleitung das Bremsmoment zum Stoppen des stirnseitig großflächigen Schleifers ausreichend. Die anfängliche Drehzahl des Schleifers wird dabei so niedrig angesetzt, daß eine gegenseitige Vorschädigung der Schleifer ausgeschlossen werden kann. Der Stillstand des Schleifers kann über Sensoren auf der Motorwelle detektiert werden, die aktuelle Vorschubposition kann gespeichert werden.

Wesentlich für das Verfahren ist die genaue Kenntnis der Positionsdaten des zweiten Bearbeitungswerkzeugs, sodass dessen stirnseitige Bearbeitungsfläche 5 als Referenzfläche dienen kann. Mittels verschiedener Antastvorgänge werden die absoluten Positionierdaten des zweiten Schleifers 4 ermittelt. Die große stirnseitige Schleiffläche 5 des zweiten Schleifers 4 erlaubt auch in axialer Richtung, also entlang der Drehachse 7, eine genaue absolute Positionsbestimmung, da die Reibfläche ausreichend groß ist, um an einer beispielsweise am Werkstück angeordneten Referenzfläche durch Berührung abgebremst zu werden.

Aus den absoluten Positionierwerten des zweiten Schleifers 4 kann nun indirekt die absolute Position des ersten spitzen Schleifers 1 bestimmt werden. Insbesondere ist diese relative Vermessung sehr gut bei einer Schleifbearbeitung geeignet, bei der ein Werkstück mit einem spitzen und einem stirnseitig großflächigen Schleifer beschliffen wird.

Die gesamte Antriebswelle und damit auch das Werkzeug 1 kann über nicht dargestellte Mittel auf das zu bearbeitende Werkstück 8 zu und von diesem weg bewegt werden.

Dabei wird die Drehzahl des Antriebsmotors für das Werkzeug 1 auf eine Anfahrdrehzahl eingestellt die so niedrig ist, dass bei einer Berührung der Referenzfläche 5 durch die Werkzeugspitze 7 aufgrund der dadurch hervorgerufenen Reibungskräfte die Drehzahl des Antriebsmotors zu Null wird. Der Antriebsmotor wird also reibungsbedingt bis zum Stillstand abgebremst.

Es ist unmittelbar einleuchtend, dass diese Bremskraft bei einer kegelförmig zulaufenden Spitze aufgrund der nahezu punktförmigen Berührungsfläche sehr klein bleiben muß, sodass erst aufgrund des durch den Versatz gebildeten Hebelarms r ein ausreichend großes Bremsmoment aufgebaut wird, wodurch die Antriebswelle deutlich früher zum Stillstand kommt als ohne einen Versatz.

Um Beschädigungen der Bearbeitungswerkzeuge durch die bei der Positionsbestimmung auftretenden Kräfte auszuschließen, ist in einer Vorschubeinrichtung der Antriebswelle ein vorgespanntes Federelement vorzusehen, welches durch Einfedern unter Last die auf das stillstehende Werkzeug einwirkenden Kräfte aufnimmt. Das Einfedern erfolgt dabei gegen die Richtung des Vorschubs, wobei die Vorspannung des Federelements groß genug gewählt werden muß um die während der Bearbeitung planmäßig auftretenden vorgesehenen Belastungen des Werkzeugs zu übertreffen. Ein Einfedern findet daher nur zum Schutz des Werkzeugs gegen Überlast statt. Dadurch kann einerseits eine Beschädigung der Werkzeugspitze durch Überlast vermieden werden und andererseits eine genaue Bearbeitung des Werkstücks mit der Werkzeugspitze erfolgen.

Bei abgebremstem Antriebsmotor wird dafür Sorge getragen, dass die sich an der Stirnseite berührenden Werkzeuge 1, 4 nicht weiterdrehen. Dies wird dadurch bewirkt, dass die Drehzahl des Bearbeitungswerkzeugs bzw. des Antriebsmotors als Führungsgröße für den Vorschub des Werkzeugs oder der Werkzeuge verwendet wird. Sinkt die Drehzahl des Werkzeugs 4, so verringert sich der Vorschub. Wird das Werkzeug 4 bis auf Null abgebremst, so wird der Vorschub zu Null.

Es hat sich gezeigt, dass es bei der Positionsbestimmung von zwei diamantierten Schleifern aneinander ausreicht, wenn das Bearbeitungswerkzeug vor der Berührung mit einer Drehzahl von weniger als einem Hunderstel der zur Bearbeitung verwendeten Drehzahl angetrieben ist, insbesondere mit 1 bis 10 Umdrehungen/Sekunde.

Die Werkzeuge 1 und 4 werden vor dem eigentlichen Berühren zur Positionsbestimmung der Werkzeugspitze 2 zueinander ausgerichtet, wobei es sich hier um eine grobe Bestimmung der Position bezüglich des Abstandes zueinander handelt. Erst nach dieser groben Lagenbestimmung, die mit gegenüber der sich anschließenden Positionsbestimmung deutlich größeren Vorschubgeschwindigkeiten erfolgen kann, findet ein langsames Zustellen der Werkzeuge statt, sodass insgesamt eine kürzere Zeit benötigt wird.

Nach der Positionsbestimmung kann die festgestellte Position um einen vorgegebener Korrekturwert verändert werden, beispielsweise um trägheitsbedingte Systemeigenschaften zu berücksichtigen. Dadurch kann sich die Genauigkeit nochmals verbessern.

Vor jedem Schleifvorgang wird der Schleifer axial positioniert. Es wird darauf geachtet, dass der Abstand zwischen den Schleiferspitzen sehr kurz ist, damit nur kurze Antastwege zu fahren sind. Dies kann durch einen vorherigen groben Antastvorgang des Bearbeitungswerkzeugs 1 an eine Referenzfläche des stillstehenden Werkstücks geschehen.

Danach wird der zweite Schleifer 4 in langsame Rotation (1-10 Hz) versetzt. Dabei wird dem Antriebsmotor, gerade soviel Leistung zugeführt, dass die Reibmomente der realen Lagerung und des Getriebefetts überwunden werden. Die hervorgerufene Drehzahl der Schleifer wird dabei so niedrig angesetzt, dass eine Vorschädigung der Schleifer ausgeschlossen werden kann.

**Patentansprüche**

1. Verfahren zur Bestimmung aktueller Positionsdaten eines ersten Bearbeitungswerkzeuges (1) in einem ein zweites Bearbeitungswerkzeug (4) aufweisenden Bearbeitungsraum (11), wobei das zweite Werkzeug (4) in bezug auf die zu bestimmenden Positionsdaten des ersten Werkzeugs (1) bekannte Positionsdaten aufweist, wobei das erste Werkzeug (1) und das zweite Werkzeug (4) aufeinander zu und voneinander weg bewegbar sind, **dadurch gekennzeichnet, dass** das in seiner Position zu bestimmende erste Werkzeug (1) eine in seiner Position bekannte Bearbeitungsfläche (5) des zweiten Werkzeugs (4) berührt, wobei die Drehzahl eines Antriebsmotors für das zweite Werkzeug (4) auf eine Anfahrdrehzahl eingestellt wird, die so niedrig ist, dass die Rotation des zweiten Werkzeugs (4) bei einer Berührung des ersten Werkzeugs (1) gebremst wird, womit indirekt die Position des ersten Werkzeugs (1) bestimmt wird.

2. Verfahren nach Anspruch 1, **dadurch gekennzeichnet, dass** zunächst die absoluten Positionsdaten des zweiten Bearbeitungswerkzeugs (4) mittels verschiedener Berührungen des zweiten Werkzeugs (4) an einer Referenzfläche des Werkstücks oder einem an dem Werkstück befestigten Teil festgestellt werden, wobei auch in axialer Richtung eine absolute Positionsbestimmung einer Bearbeitungsfläche (5) erfolgt.

3. Verfahren nach Anspruch 1 oder 2, **dadurch gekennzeichnet, dass** das zweite Werkzeug (4) eine stirnseitige Bearbeitungsfläche (5) und das erste Bearbeitungswerkzeug (1) eine an einer sich verjüngenden Spitze liegende Bearbeitungsfläche aufweist.

4. Verfahren nach einem der Ansprüche 1 bis 3, **dadurch gekennzeichnet, dass** die Bearbeitungsachsen (7, 8) der beiden Werkzeuge (1, 4) parallel mit einem Versatz (r) zueinander ausgerichtet werden, so dass eine Berührung des ersten Bearbeitungswerkzeugs (1) auf der sich drehenden Bearbeitungsfläche (5) des zweiten Bearbeitungswerkzeugs (4) außermittig erfolgt.

5. Verfahren nach einem der Ansprüche 1 bis 4, **dadurch gekennzeichnet, dass** das zweite Bearbeitungswerkzeug (4) vor der Berührung mit einer Drehzahl von weniger als einem Hunderstel der zur Bearbeitung verwendeten Drehzahl, insbesondere mit einer Drehzahl von 1 bis 10 Umdrehungen/Sekunde angetrieben ist.

6. Verfahren nach einem der Ansprüche 1 bis 5, **dadurch gekennzeichnet, dass** die Werkzeuge (1, 4) vor der eigentlichen Positionsbestimmung zueinander grob ausgerichtet werden.

7. Verfahren nach einem der Ansprüche 1 bis 6, **dadurch gekennzeichnet, dass** während des Herantastens der Werkzeugspitzen (2, 5) dem Antriebsmotor so viel Leistung zugeführt wird, dass die Reibmomente der realen Lagerung und aller Schmierungen gerade überwunden werden.

8. Verfahren nach einem der Ansprüche 1 bis 7, **da-**

durch gekennzeichnet, dass die bestimmte Position des ersten Werkzeugs (1) um einen vorgegebenen Korrekturwert, der trägheitsbedingte Systemeigenschaften berücksichtigt, verändert wird.

9. Verfahren nach einem der Ansprüche 1 bis 8, **dadurch gekennzeichnet, dass** der Vorschub des zweiten Werkzeugs (4) und/oder des ersten Werkzeugs (1) so an die Drehzahl des Antriebsmotors für das zweite Werkzeug (4) gekoppelt ist, dass eine Verringerung der Drehzahl des zweiten Werkzeugs (4) eine Verringerung des Vorschubs bewirkt.

10. Verfahren nach Anspruch 9, **dadurch gekennzeichnet, dass** der Vorschub des Werkzeugs (1, 4) angehalten wird, wenn die Drehzahl des Antriebsmotors des zweiten Werkzeugs (4) Null wird.

11. Vorrichtung zur Bestimmung aktueller Positionsdaten eines Bearbeitungswerkzeugs, enthaltend eine erste und eine zweite Spindel zur Aufnahme jeweils mindestens eines in Rotation versetzbaren Bearbeitungswerkzeuges (1, 4) mit einer sich zur Spitze verjüngenden bzw. mit einer stirnseitigen Bearbeitungsfläche (2, 5), wobei die Spindeln so angeordnet und so gelagert sind, dass die Bearbeitungswerkzeuge (1, 4) und das Werkstück (8) im Sinne einer Materialabtragung am Werkstück (8) aufeinander zu und voneinander weg bewegt werden können, enthaltend ferner Antriebsmotoren zur Verstellung der Spindeln und für den Antrieb der Bearbeitungswerkzeuge, enthaltend ferner Mittel zur Erzeugung ein den Vorschubweg des Werkzeuges festlegendes Signal, welches zur Ermittlung der Startposition des Bearbeitungswerkzeuges (1) verwendet wird, **dadurch gekennzeichnet, dass** eine Berührungsfläche (5) durch die stirnseitige Bearbeitungsfläche des sich drehenden Werkzeugs (4) gebildet ist und dass das erste Bearbeitungswerkzeug achsparallel mit einem Versatz (r) auf die Berührungsfläche ausgerichtet ist.

12. Vorrichtung nach Anspruch 11, **dadurch gekennzeichnet, dass** das erste Werkzeug (1) eine sich verjüngende Spitze aufweist und insbesondere als Kugelschleifer oder Kegelschleifer mit Spitze und das zweite Werkzeug (4) als eine Stirnfläche eines Zylinders ausgebildet ist.

13. Vorrichtung nach Anspruch 11 oder 12, **dadurch gekennzeichnet, dass** Antriebsmittel für den Vorschub des ersten Werkzeugs (1) und/oder des zweiten Werkzeugs (4) zueinander hin vorgesehen sind, die so an die Drehzahl des zweiten Bearbeitungswerkzeugs (4) gekoppelt sind, dass eine Verringerung der Drehzahl des zweiten Bearbeitungswerkzeugs (4) die durch die Antriebsmittel hervorgerufene Bewegung verringert.

**Claims**

1. A method of determining current position data of a first cutting tool (1) in a machining space (11) having a second cutting tool (4), the second tool (4) having known position data with regard to the position data of the first tool which are to be determined, it being possible for the first tool (1) and the second tool (4) to be moved toward and away from one another, **characterized in that** the first tool (1) to be determined in its position comes into contact with a cutting surface (5), known in its position, of the second cutting tool (4), the rotary speed of a drive motor for the second tool being set to a starting rotary speed which is so low that the rotary speed of the second tool is measurably reduced when the tool (1) comes into contact.

2. The method as claimed in claim 1, **characterized in that** first of all the absolute position data of the second cutting tool are established by means of various contact actions of the tool at a reference surface of the workpiece or at a part fixed to the workpiece, an absolute determination of the position of a cutting surface (5) also being effected in the axial direction.

3. The method as claimed in claim 1 or 2, **characterized in that** the second tool (4) has an end cutting surface (5) and the first cutting tool (1) has a cutting surface lying at a narrowing tip.

4. The method as claimed in one of claims 1 to 3, **characterized in that** the cutting axes (7, 8) of the two tools (1, 4) are oriented parallel to one another with an offset (r), so that the first cutting tool (1) comes in contact eccentrically with the rotating cutting surface (5) of the second cutting tool (4).

5. The method as claimed in one of claims 1 to 4, **characterized in that** the cutting tool (4), before the contact, is driven at a rotary speed of less than one hundredth of the rotary speed used for the machining, in particular at a rotary speed of 1 to 10 revolutions/ second.

6. The method as claimed in one of claims 1 to 5, **characterized in that** the tools (1, 4) are oriented roughly with respect to one another before the actual determination of the position.

7. The method as claimed in one of claims 1 to 6, **characterized in that**, during the feeling of the tool tips (2, 5), so much power is fed to the drive motor that the friction moments of the actual bearing arrangement and of all the lubrication are just overcome.

8. The method as claimed in one of claims 1 to 7, **characterized in that** the established position of the tool (1) is changed by a predetermined correction value.

9. The method as claimed in one of claims 1 to 8, **characterized in that** the feed of the second tool (4) and/or of the first tool (1) is coupled with the rotary speed of the drive motor for the tool (4) in such a way that a reduction in the rotary speed of the tool (4) brings about a reduction in the feed.

10. The method as claimed in claim 9, **characterized in that** the feed of the tool (1, 4) is stopped if the rotary speed of the drive motor of the tool (4) becomes zero.

11. An apparatus for determining current position data of a cutting tool, containing a first and a second spindle for accommodating in each case at least one cutting tool (1, 4) which can be set in rotation and has a cutting surface (2) narrowing toward the tip or respectively an end cutting surface (5), the spindles being arranged and mounted in such a way that the cutting tools (1, 4) and the workpiece (8) can be moved toward and away from one another for the purpose of material removal at the workpiece (8), also containing drive motors for adjusting the spindles and for the drive of the cutting tools, and also containing means for producing a signal which establishes the feed path of the tool and which is used for determining the starting position of the cutting tool (1), **characterized in that** a contact area (5) is formed by the end cutting surface of the rotating tool (4), and wherein the first cutting tool is oriented in an axially parallel manner with respect to the contact area with an offset (r).

12. The apparatus as claimed in claim 11, **characterized in that** the first tool (1) has a narrowing tip and is designed in particular as a spherical grinding pencil or tapered grinding pencil with tip and the second tool (4) is designed as an end face of a cylinder.

13. The apparatus as claimed in claim 11 or 12, **characterized in that** drive means are provided for the feed of the first tool (1) and/or of the second tool (4) toward one another, these drive means being coupled with the rotary speed of the cutting tool (4) in such a way that a reduction in the rotary speed of the cutting tool (4) reduces the movement brought about by the drive means.

## Revendications

1. Procédé pour la détermination de données de position actuelles d'un premier outil d'usinage (1) dans une chambre d'usinage (11) présentant un second outil d'usinage (4), le second outil (4) présentant des données de position connues par rapport aux données de position à définir du premier outil (1), le premier outil (1) et le second outil (4) étant déplaçables par éloignement et rapprochement l'un de l'autre, **caractérisé en ce que** le premier outil (1) à définir dans sa position touche une surface d'usinage (5) du second outil (4) dont la position est connue, le nombre de tours d'un moteur d'entraînement pour le second outil (4) étant réglé à un nombre de tours de démarrage qui est si faible que la rotation du second outil (4) est freinée lors de l'entrée en contact du premier outil (1), ce qui détermine de manière indirecte la position du premier outil (1).

2. Procédé selon la revendication 1, **caractérisé en ce que** tout d'abord, les données de position absolue du second outil d'usinage (4) sont déterminées par entrée en contact du second outil (4) avec une surface de référence de la pièce à usiner ou d'une pièce fixée sur la pièce à usiner, une détermination absolue de position d'une surface d'usinage (5) étant effectuée également dans le sens axial.

3. Procédé selon la revendication 1, **caractérisé en ce que** le second outil (4) présente une surface d'usinage en face avant (5) et le premier outil d'usinage (1) une surface d'usinage se trouvant à une pointe conique.

4. Procédé selon l'une des revendications 1 à 3, **caractérisé en ce que** les axes d'usinage (7, 8) des deux outils (1, 4) sont orientés parallèlement entre eux avec un décalage (r) de sorte qu'une entrée en contact du premier outil d'usinage (1) sur la surface d'usinage (5) en rotation du second outil d'usinage (4) s'effectue de manière excentrée.

5. Procédé selon l'une des revendications 1 à 4, **caractérisé en ce que** le second outil d'usinage (4) est entraîné, avant l'entrée en contact, à une vitesse de moins d'un centième de la vitesse de rotation utilisée pour l'usinage, en particulier à une vitesse de 1 à 10 tours par seconde.

6. Procédé selon l'une des revendications 1 à 5, **caractérisé en ce que** les outils (1, 4) sont orientés entre eux de manière grossière avant la détermination proprement dite de position.

7. Procédé selon l'une des revendications 1 à 6, **caractérisé en ce que** pendant le palpage des points d'outils (2, 5), il est amené au moteur d'entraînement suffisamment de puissance pour que les couples de friction du palier réel et de tous les graissages soient juste surmontés.

8. Procédé selon l'une des revendications 1 à 7, **caractérisé en ce que** la position définie du premier outil (1) est modifiée d'une valeur de correction prédéterminée en tenant compte des propriétés de système conditionnées par l'inertie.

9. Procédé selon l'une des revendications 1 à 8, **caractérisé en ce que** l'avance du second outil (4) et/ou du premier outil (1) est accouplée à la vitesse de rotation du moteur d'entraînement pour le second outil (4) de sorte qu'une diminution du nombre de tours du second outil (4) provoque une diminution de l'avance.

10. Procédé selon la revendication 9, **caractérisé en ce que** l'avance de l'outil (1, 4) est arrêtée quand le nombre de tours du moteur d'entraînement du second outil (4) arrive à zéro.

11. Dispositif pour la détermination de données de position actuelles d'un outil d'usinage, comprenant une premier et une seconde broche pour le logement respectif d'au moins un outil d'usinage pouvant être amené en rotation (1, 4) avec une surface d'usinage avant conique (2, 5), les broches étant disposées et logées de sorte que les outils d'usinage (1, 4) et la pièce à usiner (8) peuvent être éloignées et rapprochées les uns des autres dans le sens d'un enlèvement de matière sur la pièce à usiner (8), comprenant en outre des moteurs d'entraînement pour le déplacement des broches et pour l'entraînement des outils d'usinage, comprenant en outre des moyens pour la génération d'un signal déterminant le trajet d'avance de l'outil signal qui est utilisé pour la détermination de la position de départ de l'outil d'usinage (1), **caractérisé en ce qu'**une surface de contact (5) est formée par la surface d'usinage frontale de l'outil en rotation (4) et **en ce que** le premier outil d'usinage est orienté avec un décalage (r) axialement parallèle en direction de la surface de contact.

12. Dispositif selon la revendication 11, **caractérisé en ce que** le premier outil (1) présente une pointe conique et en particulier est réalisé comme une meuleuse de boules ou cônes métalliques avec une pointe et le second outil (4) comme une surface avant d'un cylindre.

13. Dispositif selon la revendication 11 ou 12, **caractérisé en ce qu'**il est prévu des moyens d'entraînement pour l'avance du premier outil (1) et/ou du second outil (4) l'un par rapport à l'autre, qui sont accouplés au nombre de tours du second outil d'usinage (4) de sorte qu'une diminution du nombre de rotation du second outil d'usinage (4) diminue le déplacement provoqué par les moyens d'entraînement.

## Fig. 1

**EP 1 226 794 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4030175 C2